# EUROPEAN PATENT APPLICATION

(11) **EP 0 895 430 A1**
(43) Date of publication of application: **03.02.1999**
(21) Application number: 97202373.3
(22) Date of filing: 30.07.1997
(51) Int. Cl.: H04Q 3/00

(54) **Communications switching network**

(71) Applicant: NORTHERN TELECOM LIMITED, Montreal, Quebec H2Y 3Y4 (CA)
(72) Inventor: Kirkby, Paul Anthony, Old Harlow, Essex CM17 0BB (GB)
(74) Representative: Dennis, Mark Charles

(57) **Abstract**

A communications network is provided in which switching nodes 7 configure periodically. There is a plurality of shortest paths having equal propagation delays between two switching nodes between which there is at least one intermediate node.

## Description

This invention relates to communications switching systems.

The background to invention will be described in relation to long distance communications although, as the reader will understand, the invention can be applied to a network of any physical size including, for example, for distributing internal data in a data processor or computer.

In networks where a large amount of traffic is telephone calls, it has been customary to configure the network at different times of the day in order to accommodate changes in the volume of traffic. Thus, for example, the network is configured to accommodate the volume of transatlantic traffic which is greatest during that period of the day when office hours overlap on both sides of the Atlantic.

It is expected that traffic will become less predominantly telephone calls as the volume of data and video increase. It is conjectured that changes in the volume of traffic will become less predictable as users including antomous software agents access international data and video banks, for example, and that a network which can be reconfigured very flexibly and relatively quickly will be needed. One of the problems, for example, in reconfiguring present telephone networks is that it cannot be done whilst any of the pipes involved are carrying traffic without interrupting all the voice calls being carried or causing errors in the data traffic.

Against this background, in accordance with the invention, there is provided a communications network in which switching nodes configure periodically, there being a plurality of shortest paths having equal propagation delays between two switching nodes between which there is at least one intermediate node.

Since the propagation delays are equal the network can be reconfigured even while calls are in progress on the pipes involved without any effect noticeable to the user except, perhaps, changes in delays due to congestion and changes in charging rates. When a switching node is configured periodically, it can stay in the same configuration or change its configuration.

The switching nodes are preferably arranged in successive sets, there being a plurality of paths between successive sets and all paths between two successive sets having equal data propagation delays from end to end.

In a preferred arrangement,the switching nodes are configurable so that all data arriving at one input port is directed to a selected output port. This enables the use of optical switches for the switching nodes.

Preferably, ones of the switching nodes have two input ports and two output ports. This enables the network to be more easily controlled.

In order to allow data to pass to the periphery, ones of the switching nodes preferably have two input ports and two output ports in the plane of the network and two input ports and two output ports in the plane of another network or a periphery, the switching nodes being configurable so that all data arriving at one input port is directed to one or other output port selectively in either plane.

The ones of the switching nodes preferably comprise a plurality of switching elements, each switching element having two input ports and two output ports, the switching elements being configurable so that all data arriving at one input port is directed to one or other output port selectively.

The ones of the switching nodes may be conveniently implemented by 16 switching elements.

Each path through the switching node may be bi-directional.

In order to produce a highly symmetrical network, the switching nodes can preferably be configured so that data launched onto the network from one output port of a switching node, would arrive back at an input port to that node if all the switching nodes involved are configured similarly.

An embodiment of the invention will now be described, by way of example, with reference to the accompanying drawings, in which:
Figure 1 is a schematic of a hypernetwork embodying the invention;
Figure 2 is a schematic of a switching element for the network of Figure 1, shown in one configuration;
Figure 3 is a schematic of the switching element of Figure 2 in an alternative configuration;
Figure 4 is a schematic of a switching node which enables comprehensive communication between the network and another network or a periphery; and
Figure 5 is a schematic of a switching node which enables basic communication between the network and another network or a periphery.

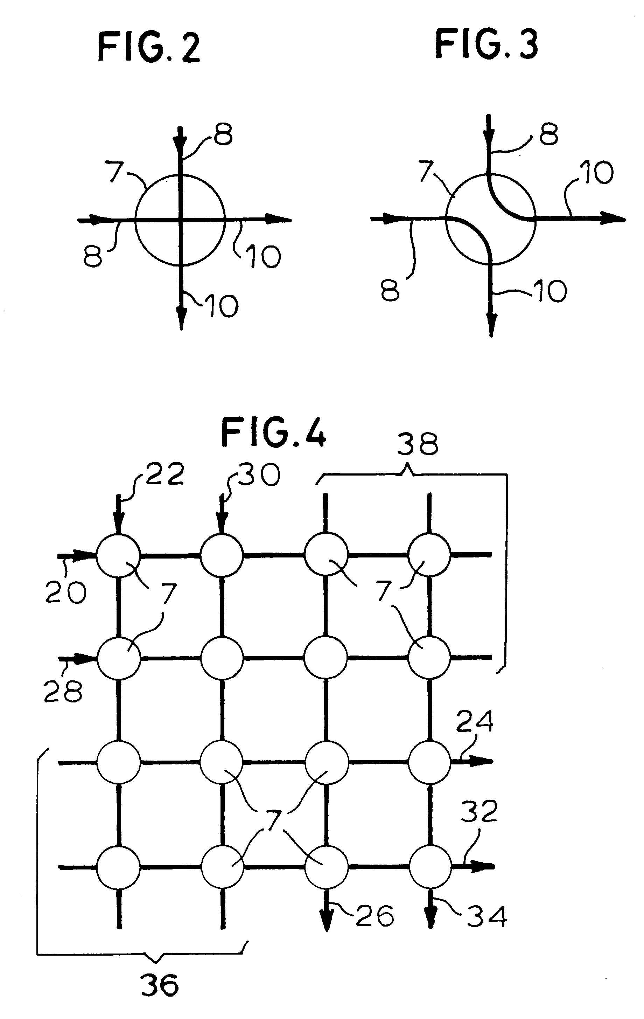

Referring to the drawings, the hypernetwork comprises a global plaid of data transmission pipes 2 some intersections between which merely cross e.g. the intersection referenced 4. At others of the intersections switching, nodes of which one is referenced 6, are located. Ones of these maybe simple switching elements 7, having two input ports 8 and two output ports 10, which allow all data on the pipes to proceed straight across the intersection as illustrated in Figure 2, or which swap the data as illustrated in Figure 3. The element may be bi-directional, so that data may be transmitted simultaneously in the reciprocal directions. For convenience the configuration in Figure 2 is referred to as a "cross configuration" and that in Figure 3 is referred to as a "bar configuration". Alternatively, ones of the switching nodes also allow the exchange of data with a hyponetwork or a periphery, as will be explained.

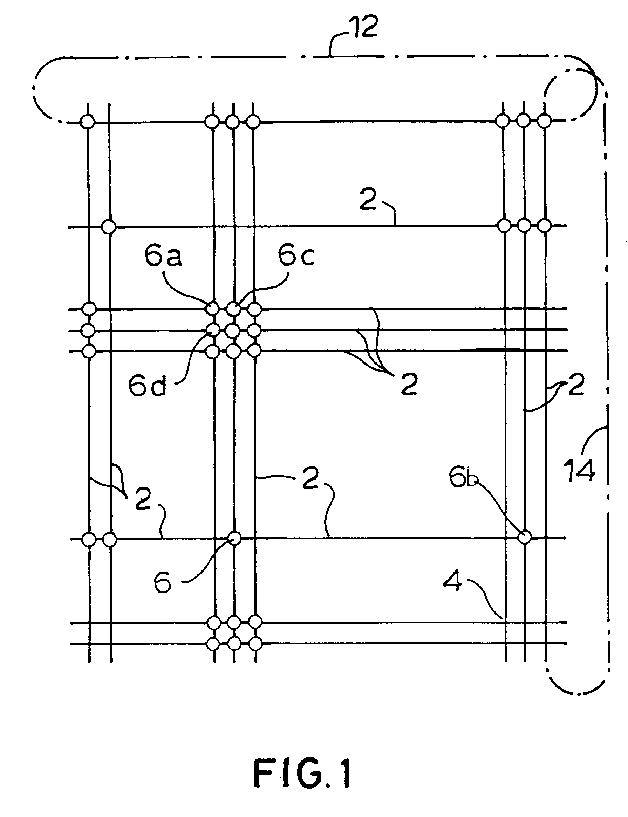

At the edges of the schematic of Figure 1 the network is looped round to form a complete circuit, two loops being illustrated at 12 and 14.

A basic property of the network is that the propagation delays in alternative shortest paths between switching nodes e.g. 6a and 6b, which have at least one intermediate node, are equal. In Figure 1, propagation delays are represented by equal lengths of pipe. That assumes a constant speed of light. That may change, however, dependent on the medium. The actual physical location of the switching nodes is not important. If a physical link needs to be "padded" to increase its length this can be done with for instance a coil of fibre or an electronic FIFO delay line. Control circuits may be used to precisely adjust delays. What is important is the time it takes data to transit the pipe. It will be observed that if all the North-South circuits have equal propagation delays, and all the East-West circuits have equal propagation delays, the pipes correspond to orthogonal lines on the surface of a four dimensional sphere. To satisfy this condition all the loops corresponding to 12 must be equal as must all the loops corresponding to 14 be equal.

Since the propagation delays are equal for a plurality of shortest paths from switching node 6a to switching node 6b, the timing of data will remain constant on arrival at node 6b, irrespective of which of the shortest paths it took. If it is desirable to reconfigure the network this may be done even though pipes involved in the reconfiguration may be carrying traffic, without any effect noticeable to the user except, perhaps, changes in delays due to congestion and changes in charging rates.

In a preferred example, the pipes 2 are implemented in optical fibre and the switching nodes 6 are optical switches. The data is sent in frames each containing a super-packet which may have a longer duration than the propagation delay between some successive switching nodes. The frames also each contain a switching interval, separating one packet from the next. The switching interval is sufficiently long to allow the switching nodes to configure between packets, that is to say a node may change or not change its existing configuration. The switching intervals may be determined at any particular node by detecting a predetermined pattern in the data to signify the end of a packet, or by frame timing recovery or by a combination of both. One example of a predetermined pattern is no light transmitted for a predetermined period in an optical fibre implementation. The frames are all of the same length, so the switching nodes configure periodically. In this example, the intention is to allow the network to be configured flexibly. The slow operation of some types of optical switches relative to electronic switches is sufficient for the purpose, since the whole input on one pipe to a port of the switching node is passed straight on or swapped. The switching nodes may be configured every 1ms for example. Dependent on the amount of traffic on a particular path it may set up on a long term basis, or periodically once in a number of switching intervals.

The invention is not limited to the use of super-packets. In an extreme alternative example, a frame contains only one bit. In this example the switching nodes are implemented by electronic circuits, for example, in a computer or data processor.

The general arrangement shown in Figure 1 allows data to proceed South and East or, if the paths are bi-directional, North and West. Thus, for example, transmission is not simultaneously possible in the directions South and West, or North and East. This has the effect that the nodes 6d and 6c, although physically close, can only be connected by a path which involves nearly a complete circuit.

In order to make provision for transmission in the precluded directions, in the analogy of the four dimensional sphere, the pipes must define squares on the surface of the sphere. Thus taking any switching node e.g. 6a, for every node e.g. 6c on the West-East pipe, there must be another node 6d on the North-South pipe, from which the propagation delay from the node 6a is the same. In an example, the nodes are arranged in successive sets and there are a plurality of paths between successive sets and all paths between successive sets have equal propagation delays. The effect is to create successive sets of nodes which configure simultaneously within the set. Which ever direction data is travelling in, South and East or South and West, the propagation delays are such that the interpacket switching interval occurs at the same time. In one example of such a network all the data pipes could have the same propagation delay. The network would then be syndronous in the sense that all nodes would switch simultaneously.

However, even if each switching node is able to provide a configuration which sent data packets arriving on the North port to either the West or to the East port, conflict has to be avoided. This could be achieved by operating the entire network periodically in a South and East configuration for some frames and in a South and West configuration for other frames, in each case the selectable alternative configuration being the cross configuration.

In order to allow hyponetworks or peripheries to communicate over the network, interplane switching nodes are provided. These have four ports in the plane of the hypernetwork and four ports in the plane of the hyponetwork or periphery. The ports may be arranged as two input ports and two output ports in each plane, or may be bi-directional. The interplane switching nodes may be both arranged in a cross or bar configuration within the respective planes or may be configured to swap data from a port in one plane to a selected port in the other.

An implementation of such a switching node, using the simple switching elements of Figures 2 and 3, is shown in Figure 4. The arrangement of 16 switching elements in an array as shown is extremely comprehensive. One direction of data transmission is illustrated. Input ports 20 and 22 are located in the hypernetwork. Output ports in the hypernetwork are ports 32 and 34 in one arrangement. In this arrangement, input ports in the hyponetwork or periphery are provided at 28 and 30. Output ports 24 and 26 being provided in the hyponetwork. In an alternative arrangement the hypernetworks output ports could be those indicated at 32 and 34, while those in the hyponetwork or periphery would be those indicated at 24 and 36. Many different arrangements are possible, different patterns of elemental switching patterns being required to achieve the various nodal configurations.

There may be a hierarchy of hypernetworks and hyponetworks and these may be constructed to achieve super symmetry in which many symmetries are discernible no matter where the view point is located. The 16 element inter-network switching nodes of Figure 4 interfacing hypernetworks and hyponetworks in which all data pipes have equal propagation delays would provide a high degree of symmetry.

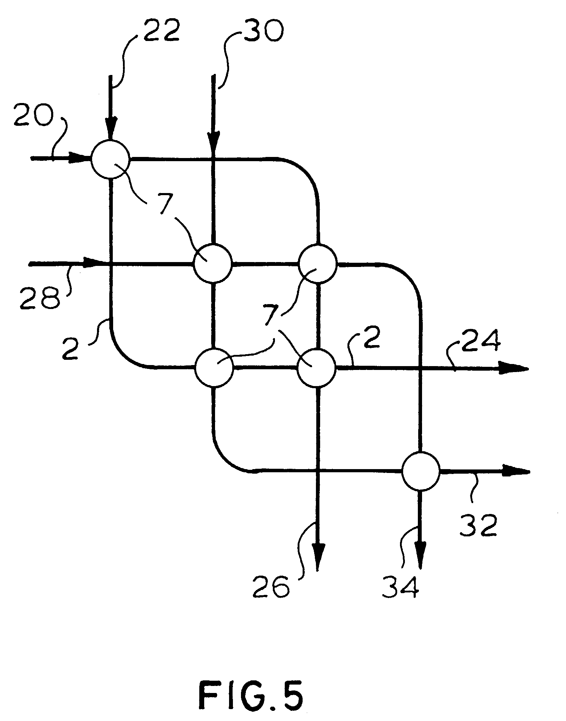

It will be noticed that some of the ports 36 of the array are not connected. These could be used to provide a simultaneous return path over different pipes or connection to alternative hyperspheres. If that is not required the node may be reduced to the arrangement of 6 elements illustrated in Figure 5.

## Claims

1. A communications network in which switching nodes configure periodically, there being a plurality of shortest paths having equal propagation delays between two switching nodes between which there is at least one intermediate node.

2. A network as claimed in claim 1, wherein the switching nodes are arranged in successive sets, there being a plurality of paths between successive sets and all paths between two successive sets having equal data propagation delays from end to end.

3. A network as claimed in claim 1 or 2, in which the switching nodes are configurable so that all data arriving at one input port is directed to a selected output port.

4. A network as claimed in any preceding claim, wherein ones of the switching nodes have two input ports and two output ports,

5. A network as claimed in any preceding claim, wherein ones of the switching nodes have two input ports and two output ports in the plane of the network and two input ports and two output ports in the plane of another or a periphery, the switching nodes being configurable so that all data arriving at one input port is directed to one or other output port selectively in either plane.

6. A network as claimed in claim 5, wherein said ones of the switching nodes comprise a plurality of switching elements, each switching element having two input ports and two output ports, the switching elements being configurable so that all data arriving at one input port is directed to one or other output port selectively.

7. A network as claimed in claim 6, wherein said ones of the switching nodes comprise 16 switching elements.

8. A network as claimed in any preceding claim, wherein each path through the switching node is bi-directional.

9. A network as claimed in any preceding claim, in which the switching nodes can be configured so that data launched onto the network from one output port of a switching node, would arrive back at an input port to that node if all the switching nodes involved are configured similarly.

10. A network as claimed in any preceding claim, wherein the switching nodes can preferably be configured so that data launched onto the network from one output port of a switching node, would arrive back at an input port to that node if all the switching nodes involved are configured similarly.

11. A network as claimed in any preceding claim wherein there is a hierarchy of intermeshed hyper and hypo spheres connected in a super symmetric manner.
